# EUROPEAN PATENT APPLICATION

(11) **EP 2 134 052 A1**
(43) Date of publication of application: **16.12.2009**
(21) Application number: 08305258.9
(22) Date of filing: 13.06.2008
(51) Int. Cl.: H04L 27/34

(54) **An improved QAM transmission scheme for AWGN channels**

(71) Applicant: THOMSON Licensing, 92100 Boulogne-Billancourt (FR)
(72) Inventor: Zhou, Wei, Beijing 100086 (CN); Zou, Li, Beijing 100088 (CN)
(74) Representative: Ruellan-Lemonnier, Brigitte

(57) **Abstract**

A cable transmitter (100) supports a number of low density parity check (LDPC,105) coding rates, e.g., 1/4, 1/3, 2/5, 1/2, 3/5, 2/3, 3/4, 4/5, 5/6, 8/9 and 9/10; and supports a number of quadrature amplitude modulation (QAM,115) schemes, e.g., 4-QAM, 16-QAM, 64-QAM, 256-QAM, 1024-QAM. For each *m²*-QAM scheme, a uniform *m*-PAM symbol constellation is used for the one axis (115-1) of the QAM modulation and a non-uniform *m*-PAM symbol constellation is used for the other axis (115-2) of the QAM modulation.

## Description

### BACKGROUND OF THE INVENTION

The present invention generally relates to communications systems and, more particularly, to a communications systems having a plurality of code rates and modulation schemes.

Digital Video Broadcasting-Cable (DVB-C) is a first generation cable transmission system (e.g., see EN 300 429 V.1.2.1 (1998-04) Digital Video Broadcasting (DVB); Framing structure, channel coding and modulation for cable systems). However, migration to a second generation cable system, DVB-C2, is currently being studied for increasing transport capacity in order to offer new services such as high-definition television (HDTV), Video-on-Demand (VoD), and other advanced personalized and interactive services in the cable environment.

One way of improving performance in a second generation cable system is to adopt for use in DVB-C2 the low density parity check (LDPC) forward error correction codes used in the second generation of Digital Video Broadcast-satellite (DVB-S2) system (e.g., see European Telecommunications Standards Institute (ETSI) Draft EN 302307, v.1.1.1, June 2004). In DVB-S2, it is known that these LDPC codes have good performance in conjunction with quadrature amplitude modulation (QAM) over a range of QAM schemes such as 4-QAM, 16-QAM, 64-QAM, 256-QAM, 1024-QAM, etc. In each of these QAM schemes, uniform symbol (signal point) constellations are used in DVB-S2 for all LDPC coding rates. Indeed, uniform symbol constellations are even used for DVB-C, DVB-S, and even next generation systems such as DVB-Terrestrial 2 (T2).

### SUMMARY OF THE INVENTION

We have studied the cable broadcasting transmission environment and find that the AWGN channel is the main transmission environment. As such, we have observed that it is possible to get better coding gains and increase the capacity of a cable system by using a unified symbol constellation for transmission. In particular, and in accordance with the principles of the invention, a uniform *m*-PAM symbol constellation is used for one axis of an *m²*-QAM modulation and a non-uniform *m*-PAM symbol constellation is used for the other axis of the *m²*-QAM modulation.

In an illustrative embodiment of the invention, a cable transmitter supports a number of LDPC coding rates, e.g., 1/4, 1/3, 2/5, 1/2, 3/5, 2/3, 3/4, 4/5, 5/6, 8/9 and 9/10; and supports a number of QAM schemes, e.g., 4-QAM, 16-QAM, 64-QAM, 256-QAM, 1024-QAM. For each *m²*-QAM scheme, a uniform *m*-PAM symbol constellation is used for the in-phase (I) axis of the QAM modulation and a non-uniform *m*-PAM symbol constellation is used for the quadrature (Q) axis of the QAM modulation.

In another illustrative embodiment of the invention, a cable transmitter supports a number of LDPC coding rates, e.g., 1/4, 1/3, 2/5, 1/2, 3/5, 2/3, 3/4, 4/5, 5/6, 8/9 and 9/10; and supports a number of QAM schemes, e.g., 4-QAM, 16-QAM, 64-QAM, 256-QAM, 1024-QAM. For each *m²*-QAM scheme, a uniform *m*-PAM symbol constellation is used for the quadrature (Q) axis of the QAM modulation and a non-uniform *m*-PAM symbol constellation is used for the in-phase (I) axis of the QAM modulation.

In another illustrative embodiment of the invention, a cable receiver supports a number of LDPC coding rates, e.g., 1/4, 1/3, 2/5, 1/2, 3/5, 2/3, 3/4, 4/5, 5/6, 8/9 and 9/10; and supports demodulation of a number of QAM schemes, e.g., 4-QAM, 16-QAM, 64-QAM, 256-QAM, 1024-QAM. For each *m²*-QAM scheme, a uniform *m*-PAM symbol constellation is used for the in-phase (I) axis of the QAM modulation and a non-uniform *m*-PAM symbol constellation is used for the quadrature (Q) axis of the QAM modulation.

In another illustrative embodiment of the invention, a cable receiver supports a number of LDPC coding rates, e.g., 1/4, 1/3, 2/5, 1/2, 3/5, 2/3, 3/4, 4/5, 5/6, 8/9 and 9/10; and supports demodulation of a number of QAM schemes, e.g., 4-QAM, 16-QAM, 64-QAM, 256-QAM, 1024-QAM. For each *m²*-QAM scheme, a uniform *m*-PAM symbol constellation is used for the quadrature (Q) axis of the QAM modulation and a non-uniform *m*-PAM symbol constellation is used for the in-phase (I) axis of the QAM modulation.

In view of the above, and as will be apparent from reading the detailed description, other embodiments and features are also possible and fall within the principles of the invention.

### BRIEF DESCRIPTION OF THE DRAWINGS

FIG. 1 shows an illustrative high-level block diagram of a system embodying the principles of the invention;

FIG. 2 shows an illustrative flow chart in accordance with the principles of the invention for use in the transmitter of FIG. 1;

FIG. 3 illustrates Table One for a 32 non-uniform PAM symbol constellation;

FIG. 4 illustrates Table Two for a 32 uniform PAM symbol constellation;

FIG. 5 illustrates a unified symbol constellation for a 1024-QAM symbol constellation using the values of Table One and Table Two; and

FIG. 6 shows another illustrative flow chart in accordance with the principles of the invention for use in the receiver of FIG. 1.

### DETAILED DESCRIPTION

Other than the inventive concept, the elements shown in the figures are well known and will not be described in detail. For example, other than the inventive concept, familiarity with Discrete Multitone (DMT) transmission (also referred to as Orthogonal Frequency Division Multiplexing (OFDM) or Coded Orthogonal Frequency Division Multiplexing (COFDM)) is assumed and not described herein. Also, familiarity with television broadcasting, receivers and video encoding is assumed and is not described in detail herein. For example, other than the inventive concept, familiarity with current and proposed recommendations for TV standards such as NTSC (National Television Systems Committee), PAL (Phase Alternation Lines), SECAM (SEquential Couleur Avec Memoire), ATSC (Advanced Television Systems Committee) (ATSC), Digital Video Broadcasting (DVB), Digital Video Broadcasting-Terrestrial (DVB-T) (e.g., see ETSI EN 300 744 V1.4.1 (2001-01), *Digital Video Broadcasting (DVB); Framing structure, channel coding and modulation for digital terrestrial television*; Digital Video Broadcasting-Cable (DVB-C) (e.g., see EN 300 429 V.1.2.1 (1998-04) *Digital Video Broadcasting (DVB); Framing structure, channel coding and modulation for cable systems*); Digital Video Broadcast-satellite (DVB-S2) system (e.g., see European Telecommunications Standards Institute (ETSI) Draft EN 302307, v.1.1.1, June 2004); and the Chinese Digital Television System (GB) 20600-2006 (Digital Multimedia Broadcasting - Terrestrial / Handheld (DMB-T/H)) is assumed. Likewise, other than the inventive concept, other transmission concepts such as eight-level vestigial sideband (8-VSB), Phase-Shift Keying (PSK), Quadrature Amplitude Modulation (QAM), and receiver components such as a radio-frequency (RF) front-end, or receiver section, such as a low noise block, tuners, and down converters; along with fast fourier transform (FFT) elements, spectrum shifters, channel state information (CSI) estimators, equalizers, demodulators, correlators, leak integrators and squarers is assumed. Further, other than the inventive concept, familiarity with processing signals, such as forming channel state information, is assumed and not described herein. Similarly, other than the inventive concept, formatting and encoding methods (such as Moving Picture Expert Group (MPEG)-2 Systems Standard (ISO/IEC 13818-1)) for generating transport bit streams are well-known and not described herein. It should also be noted that the inventive concept may be implemented using conventional programming techniques, which, as such, will not be described herein. In this regard, the embodiments described herein may be implemented in the analog or digital domains. Finally, like-numbers on the figures represent similar elements.

As noted earlier, in a second generation system such as DVB-S2, or even DVB-T2, uniform symbol constellations are used for all LDPC coding rates. However, how to effectively combine LDPC codes with a modulation technique to get maximum coding gain and shaping gain is still a useful issue. From information theory it is known that, in addition to coding gain, shaping gain can be obtained if the amplitude of the transmitter output follows a Gaussian distribution in an additive white Gaussian noise (AWGN) channel. There are two methods to get shaping gains.

One method is to use a uniform QAM constellation together with different probabilities for selecting each symbol (signal point) to provide shaping gain. This type of approach includes trellis shaping, the use of prefix codes, or a similar, subdivision of the signal constellation into variable-size regions. But this method needs one extra shaping code element in the transmitter design, which leads to some increase in transmitter complexity.

The second method is to use a non-uniform symbol constellation in order to obtain shaping gain, i.e., geometrical shaping. Here, each symbol of the constellation is assumed to be chosen with the same probability and the symbols are arranged in a way that a Gaussian distribution of the output signal at the transmitter results, e.g., more symbols are used at the lower power levels and less symbols are used at the higher power levels. This method does not require an extra shaping code element in the transmitter.

Unfortunately, one reason the above-noted standards use uniform symbol constellations is because of a number of disadvantages in using non-uniform symbol constellations. Firstly, shaping gains usually increase with the increase of the order of the QAM constellation, e.g., for 1024-QAM, the shaping gain is about 0.7 dB, for 256-QAM, the shaping gain is about 0.5 dB, but for low order QAM, the shaping gains are very little. So there is no significant gain in using a non-uniform symbol constellation in a low order QAM scheme such as QPSK, or 16-QAM. In addition, shaping gains usually decrease with an increase in code rate. In fact, for a very high code rate, the shaping gain may even become negative. Finally, another disadvantage is that a non-uniform symbol constellation is not good in a fading channel environment.

We have studied the cable broadcasting transmission environment and find that the AWGN channel is the main transmission environment. As such, we have observed that it is possible to get better coding gains and increase the capacity of a cable system by using a unified symbol constellation for transmission. In particular, and in accordance with the principles of the invention, a uniform *m*-PAM symbol constellation is used for one axis of an *m²*-QAM modulation and a non-uniform *m*-PAM symbol constellation is used for the other axis of the *m²*-QAM modulation.

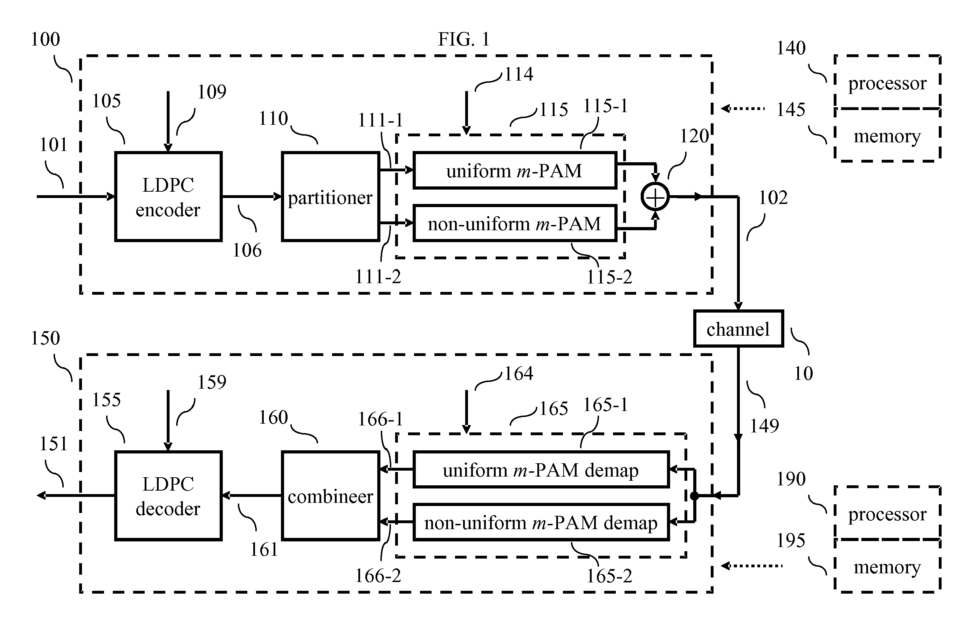

Referring now to FIG. 1, a high-level block diagram of a system in accordance with the principles of the invention is shown comprising a transmitter 100 and a receiver 150. Only those portions relevant to the inventive concept are shown in transmitter 100 and receiver 150. Transmitter 100 transmits (or broadcasts) a signal 102 over a communications channel 10 to receiver 150. Illustratively, it is assumed that channel 10 represents an AWGN channel such as represented by a cable system, though the inventive concept is not so limited and may be applicable to wire or wireless communications systems. Since communications channel 10 affects the transmitted signal, e.g., noise, etc., this results in a signal 149 being received by receiver 150.

Illustratively, transmitter 100 supports a number of LDPC coding rates, e.g., 1/4, 1/3, 2/5, 1/2, 3/5, 2/3, 3/4, 4/5, 5/6, 8/9 and 9/10. For example, and as known in the art, a coding rate of 2/5 means that for every two bits applied to the LDPC encoder, five output bits are generated by the LDPC encoder, e.g., three parity bits have been added. Further, as defined herein, a coding rate of 1/4 is the smallest coding rate and a coding rate of 9/10 is the highest coding rate. Thus, a coding rate of 1/2 is less than a coding rate of 5/6. These LDPC coding rates are described for example in the above-noted DVB-S2 system and now applied to a cable system. Transmitter 100 also supports a number of *m²*-QAM schemes, e.g., 4-QAM, 16-QAM, 64-QAM, 256-QAM, 1024-QAM, where the parameter *m²* represents the order, or size, of the symbol constellation (e.g., 2²-QAM, 4²-QAM, 8²-QAM, 16²-QAM, 32²-QAM). In accordance with the principles of the invention, a uniform *m*-PAM symbol constellation is used for one axis of an *m²*-QAM modulation and a non-uniform *m*-PAM symbol constellation is used for the other axis of the *m²*-QAM modulation.

Transmitter 100 comprises LDPC encoder 105 (representative of a forward error correction encoder), partitioner 110, and QAM modulator 115. Transmitter 100 is a processor-based system and includes one, or more, processors and associated memory as represented by processor 140 and memory 145 shown in the form of dashed boxes in FIG. 1. In this context, computer programs, or software, are stored in memory 145 for execution by processor 140 and, e.g., implement LDPC encoder 105. Processor 140 is representative of one, or more, stored-program control processors and these do not have to be dedicated to the transmitter function, e.g., processor 140 may also control other functions of transmitter 100. Memory 145 is representative of any storage device, e.g., random-access memory (RAM), read-only memory (ROM), etc.; may be internal and/or external to transmitter 100; and is volatile and/or non-volatile as necessary.

In a complementary fashion, receiver 150 supports the same number of LDPC coding rates, e.g., 1/4, 1/3, 2/5, 1/2, 3/5, 2/3, 3/4, 4/5, 5/6, 8/9 and 9/10; and the same number of *m²*-QAM schemes, e.g., 4-QAM, 16-QAM, 64-QAM, 256-QAM, 1024-QAM, for recovering the original data. In accordance with the principles of the invention, a uniform *m*-PAM symbol constellation is used for one axis of an *m²*-QAM modulation and a non-uniform *m*-PAM symbol constellation is used for the other axis of the *m²-*QAM modulation.

Receiver 150 comprises QAM demodulator 165, combiner 160 and LDPC decoder 155 (representative of a forward error correction decoder). Like transmitter 100, receiver 150 is also a processor-based system and includes one, or more, processors and associated memory as represented by processor 190 and memory 195 shown in the form of dashed boxes in FIG. 1. In this context, computer programs, or software, are stored in memory 195 for execution by processor 190 and, e.g., implement LDPC decoder 155. Processor 190 is representative of one, or more, stored-program control processors and these do not have to be dedicated to the receiver function, e.g., processor 190 may also control other functions of receiver 150. Memory 195 is representative of any storage device, e.g., random-access memory (RAM), read-only memory (ROM), etc.; may be internal and/or external to receiver 150; and is volatile and/or non-volatile as necessary.

It should be noted that, other than the inventive concept, the illustrative system shown in FIG. 1 functions in accordance with DVB as defined in the above-noted standards and other DVB standards. For example, a DVB transmission system transmits frames of data. In this regard, a DVB transmission system uses *transmission parameter signaling* (TPS) so that a transmitter can provide signaling parameters, e.g., coding rate and modulation scheme, for each transmitted frame to a receiver (e.g., see ETSI EN 300 744 V1.5.1 (2004-11), Digital Video Broadcasting (DVB); Framing structure, channel coding and modulation for digital terrestrial television). For the purposes of this example, it is assumed that transmitter 100 uses TPS as defined in DVB for providing signaling parameters to receiver 150. The values specified in the TPS, e.g., coding rate and modulation scheme can change from frame to frame. In addition, how a coding rate is selected and how a symbol constellation size is selected are irrelevant to the inventive concept and performed in accordance with DVB. As such, in DVB, the service that is transmitted in a channel determines the code rate and *m²-*QAM scheme to be used, or selected. For a given channel (e.g., frequency band), the code rate and size of the symbol constellation determine the throughput of the system. For example, if an HDTV service is transmitted on a channel, a high code rate and a large symbol constellation will be preferable. Likewise, if a single standard definition TV (SDTV) service is being transmitted on a channel, then a low code rate and a smaller symbol constellation will suffice. However, if a number of SDTV services are being transmitted on a channel, then, again, a high code rate and a large symbol constellation will be preferable.

Returning to transmitter 100, data, as represented by input signal 101 is applied to LDPC encoder 105, which encodes the data in accordance with a selected one of the above-noted coding rates as defined in the above-noted DVB-S2 standard to provide coded data 106 to partitioner 110. LDPC encoder 105 is set to the selected coding rate via signal 109, which, e.g., is provided by processor 140. Likewise, the selected *m²*-QAM scheme for QAM modulator 115 to use is provided via signal 114, which, e.g., is provided by processor 140. However, and in accordance with the principles of the invention, QAM modulator 115 uses a unified symbol constellation. Illustratively, a uniform *m*-PAM symbol constellation is used for the Q axis of an *m²*-QAM modulation and a non-uniform *m*-PAM symbol constellation is used for the I axis of the *m²*-QAM modulation. This is shown in FIG. 1 by QAM modulator 115 comprising a uniform *m*-PAM symbol constellation 115-1 and a non-uniform *m*-PAM symbol constellation 115-2. As such, partitioner 110 simply divides, or partitions (or allocates) the bits per symbol to either the quadrature (Q) axis (as represented by signal 111-1) or the in-phase (I) axis (as represented by signal 111-2). For example, if the coding rate was 3/4, then two bits would be assigned to the Q axis and the remaining two bits would be allocated to the I axis. For odd numbers of bits/symbol, partitioner 110 simply groups bits over multiple symbol periods. Partitioner 110 applies the bits allocated to the I axis to non-uniform *m*-PAM symbol constellation 115-2 and applies the bits allocated to the Q axis to uniform *m*-PAM symbol constellation 115-1. QAM modulator 110 uses the uniform symbol constellation and the non-uniform symbol constellation for providing, via combiner 120, a corresponding QAM modulated signal for transmission via signal 102.

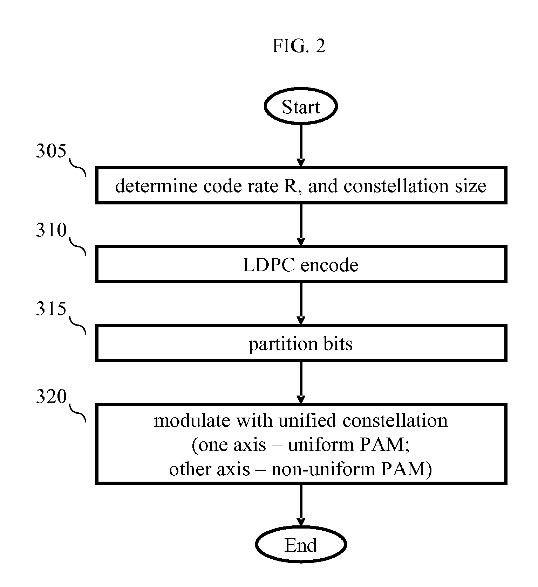

Referring now to FIG. 2, an illustrative flow chart in accordance with the principles of the invention for use in transmitter 100 is shown. In step 305, processor 140 determines (or selects) a coding rate for use by LDPC encoder 109 (which is set via signal 109) and an *m²*-QAM scheme for use by QAM modulator 110 (which is set via signal 114). In step 310, LDPC encoder 105 encodes the data to provide encoded data. In step 315, partitioner 110 partitions or allocates the encoded data to the in-phase (I) axis and the quadrature (Q) axis. In step 320, modulator 115 modulates the encoded data using a unified symbol constellation, where one axis of the unified symbol constellation uses a non-uniform *m*-PAM symbol constellation and the other axis of the unified symbol constellation uses a uniform *m*-PAM symbol constellation. As noted above, this is illustrated in FIG. 1 by using a uniform *m*-PAM symbol constellation for the Q axis and a non-uniform *m-*PAM symbol constellation for the I axis.

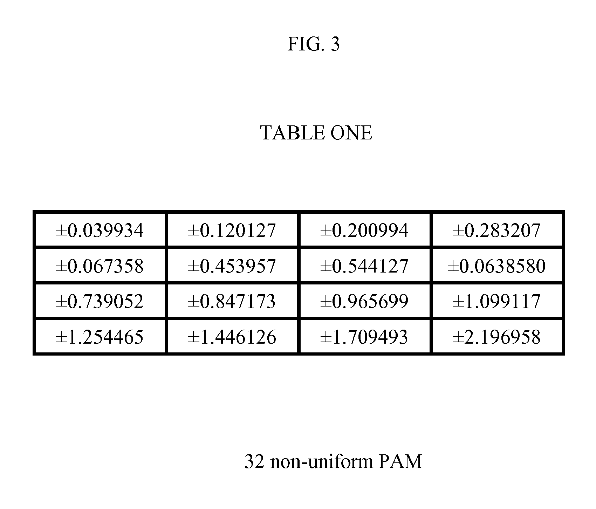

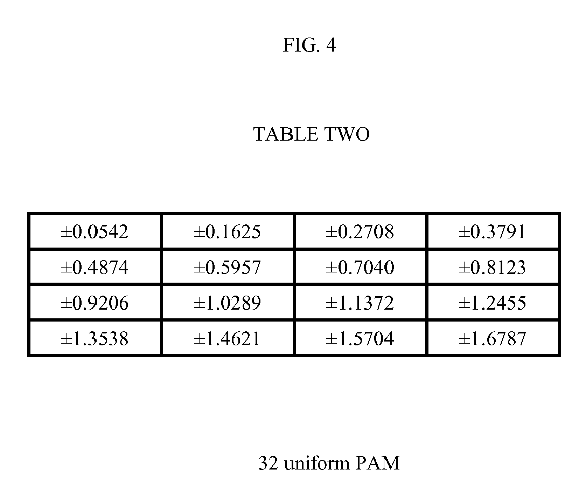

It should be noted that the various different unified symbol constellations used by QAM modulator 110 are stored in a memory, e.g., memory 145. Thus, this unified symbol constellation design is easy to implement and does not need significant additional cost, which can make all code rates achieve better performance over an AWGN channel. For a non-uniform *m*-PAM symbol constellation, the coordinates of each constellation symbol are arranged in the way such that a Gaussian distribution of the output constellation signal at the transmitter results. For a uniform *m*-PAM symbol constellation, the coordinates of each constellation symbol are arranged uniformly in the signal space. In this regard, illustrative tables for a 1024-QAM (i.e., 32²-QAM) unified symbol constellation are shown in FIGs. 3 and 4.

As known in the art, a 1024-QAM scheme can be represented as the intersecting points of two 32-PAM (Pulse Amplitude Modulation) constellations, one along the in-phase (I) axis and the other along the quadrature phase (Q) axis (both dimensions either uniform or non-uniform). However, and in accordance with the principles of the invention, one axis of the QAM scheme is now a non-uniform PAM symbol constellation and the other axis is now a uniform PAM symbol constellation. Table One of FIG. 3 provides the normalized signal points for 32 symbols of a non-uniform PAM symbol constellation for one axis. For example, in the context of FIG. 1, this non-uniform 32-PAM symbol constellation is used in element 115-2 of QAM modulator 115. It should be noted that Table One in effect contains 32 entries, via the use of the "±" sign. As known in the art, a normalized symbol constellation just means the average energy of each symbol is 1. For purposes of comparing different symbol constellations, it is preferable to normalize the constellations. For example, consider a 4-PAM constellation having symbols located at the following coordinates along an axis: -3, -1, 1, 3. After normalization, the normalized constellation becomes: -1.3416, -0.4472, +0.4472, +1.3416, where the average energy of each symbol is normalized to 1 (e.g., see "Signal Shaping by QAM for AWGN Channels and Applications Using Turbo Coding", Dirk Sommer, Gerhard P. Fettweis. ITG Conference Source and Channel Coding, pages 81-86, January 2000).

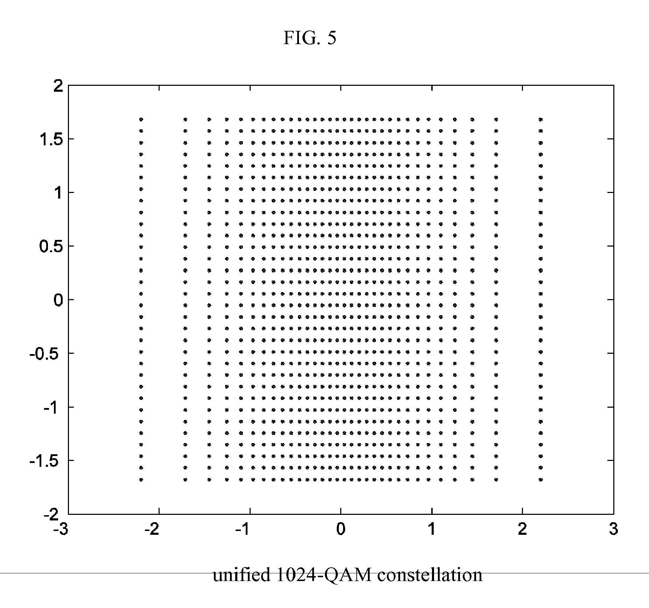

Likewise, Table Two of FIG. 4 provides the normalized signal points for 32 symbols of a uniform PAM symbol constellation. For example, in the context of FIG. 1, this uniform 32-PAM symbol constellation is used in element 115-1 of QAM modulator 115. It should again be noted that Table Two in effect contains 32 entries, via the use of the "±" sign. As such, the combination of Table One of FIG. 3 and Table Two of FIG. 4 represents a unified 1024-QAM symbol constellation, which is illustratively shown in FIG. 5. In a similar fashion, the remaining tables for the other unified *m²*-QAM symbol constellations can be constructed.

Turning back now to FIG. 1, receiver 150 performs in a complementary fashion to transmitter 100 and, as such, only an overview is provided. Receiver 150 determines the selected *m²*-QAM scheme and code rate for a received frame via the above-noted TPS signaling. As such, LDPC decoder 155 is set to the selected coding rate via signal 159, e.g., from processor 190; and QAM demodulator 165 is set to the selected *m²*-QAM modulation via signal 164, e.g., from processor 190. QAM demodulator 165 comprises a uniform *m*-PAM demapper 165-1 and a non-uniform *m*-PAM demapper 165-2. For example, in the context of the above-described unified 1024-QAM symbol constellation, Table One of FIG. 3 and Table 4 of FIG. 4 are stored in a memory, e.g., memory 195. QAM demodulator 165 provides bits associated with the I axis via signal 166-2 and bits associated with the Q axis via 166-1. Combiner 160 recombines the bits and provides the encoded data to LDPC encoder 155, which provides error-corrected signal 151.

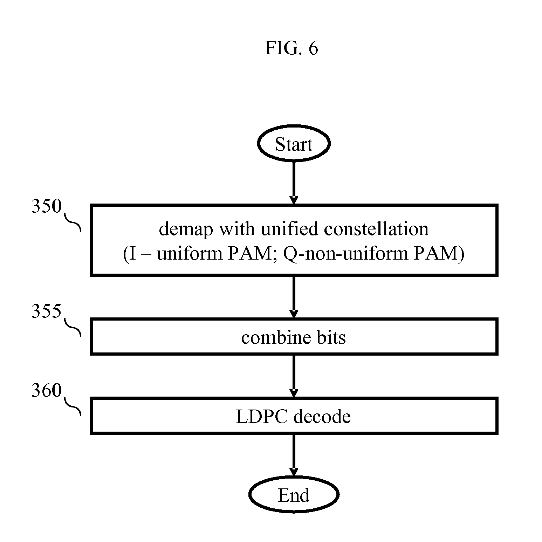

Turning now to FIG. 6, an illustrative flow chart in accordance with the principles of the invention for use in receiver 150 is shown. In step 350, demodulator 165 demodulates received signal points by demapping using a unified symbol constellation, where one axis uses a uniform *m*-PAM symbol constellation and the other axis uses a non-uniform *m*-PAM symbol constellation. In step 355, combiner 160 combines the bits associated with each axis of the unified symbol constellation; and in step 365, LDPC decoder performs error correction as necessary to provide received data 151.

It should be noted that although FIG. 1 illustrates a particular arrangement of the non-uniform *m*-PAM symbol constellation being used for the I axis and the uniform *m*-PAM symbol constellation being used for the Q axis, the inventive concept is not so limited and a non-uniform *m*-PAM symbol constellation can be used for the Q axis and a uniform *m*-PAM symbol constellation can be used for the I axis in accordance with the principles of the invention.

As described above, and in accordance with the principles of the invention, a uniform *m*-PAM symbol constellation is used for one axis of a QAM modulation and a non-uniform *m*-PAM symbol constellation is used for the other axis of the QAM modulation. In accordance with this method, better performance can be achieved than using traditional uniform QAM for low coding rates, such as less than 5/6 code rate DVB-S2 LDPC codes, and also better performance can be achieved than using non-uniform QAM for high coding rates, such as DVB-S2 LDPC code rates higher than 5/6. Overall, this unified symbol constellation structure can achieve a better tradeoff compared to a complete uniform QAM symbol constellation (i.e., in both dimensions) or a complete non -uniform QAM symbol constellation (i.e., in both dimensions) for all code rates. Indeed, this unified symbol constellation design is easy to implement and does not need significant additional cost, which can make all code rates achieve better performance over an AWGN channel. Although the inventive concept was described in the context of LDPC coding, the inventive concept is not so limited and is applicable to other channel coding schemes. Similarly, although described in the context of a cable system, the inventive concept is also applicable to other communications systems, whether they are AWGN-like or not. Further, although described in the context of a square constellation, the inventive concept is also applicable to other shapes, e.g., a cross constellation.

In view of the above, the foregoing merely illustrates the principles of the invention and it will thus be appreciated that those skilled in the art will be able to devise numerous alternative arrangements which, although not explicitly described herein, embody the principles of the invention and are within its spirit and scope. For example, although illustrated in the context of separate functional elements, these functional elements may be embodied in one, or more, integrated circuits (ICs). Similarly, although shown as separate elements, any or all of the elements (e.g., of FIG. 1) may be implemented in a stored-program-controlled processor, e.g., a digital signal processor, which executes associated software. Further, the principles of the invention are applicable to other types of communications systems, e.g., satellite, Wireless-Fidelity (Wi-Fi), cellular, etc. Indeed, the inventive concept is also applicable to stationary or mobile receivers. It is therefore to be understood that numerous modifications may be made to the illustrative embodiments and that other arrangements may be devised without departing from the spirit and scope of the present invention as defined by the appended claims.

## Claims

1. A method comprising:
forward error correcting data for providing encoded data; and
quadrature amplitude modulating the encoded data for transmission in accordance with a unified symbol constellation, wherein a uniform *m*-PAM symbol constellation is used for one axis of an *m²*-QAM modulation and a non-uniform *m*-PAM symbol constellation is used for the other axis of the *m²-*QAM modulation.

2. The method of claim 1, wherein the forward error correcting step encodes data using a coding rate, wherein the coding rate is any one of 1/4, 1/3, 2/5, 1/2, 3/5, 2/3, 3/4, 4/5, 5/6, 8/9 and 9/10; and the quadrature amplitude modulating step uses any one of 4-QAM, 16-QAM, 64-QAM, 256-QAM, 1024-QAM modulations.

3. The method of claim 1 or 2, wherein the quadrature amplitude modulation step uses the uniform *m*-PAM symbol constellation for an in-phase axis and the non-uniform *m*-PAM symbol constellation for the quadrature axis.

4. The method of claim 1 or 2, wherein the quadrature amplitude modulation step uses the uniform *m*-PAM symbol constellation for a quadrature axis and the non-uniform *m*-PAM symbol constellation for an in-phase axis.

5. The method according to one of claims 1 to 4, further comprising
allocating bits of the encoded data to each axis of the quadrature amplitude modulation.

6. A method comprising:
quadrature amplitude demodulating received data for providing encoded data in accordance with a unified symbol constellation, wherein a uniform *m*-PAM symbol constellation is used for one axis of an *m²*-QAM modulation and a non-uniform *m*-PAM symbol constellation is used for the other axis of the *m²*-QAM modulation; and
forward error correcting the encoded data for providing error corrected data.

7. The method of claim 6, wherein the forward error correcting step decodes data using a coding rate, wherein the coding rate is any one of 1/4, 1/3, 2/5, 1/2, 3/5, 2/3, 3/4, 4/5, 5/6, 8/9 and 9/10; and the quadrature amplitude demodulating step uses any one of 4-QAM, 16-QAM, 64-QAM, 256-QAM, 1024-QAM modulations.

8. The method of claim 6 or 7, wherein the quadrature amplitude demodulation step uses the uniform *m*-PAM symbol constellation for an in-phase axis and the non-uniform *m*-PAM symbol constellation for the quadrature axis.

9. The method of claim 6 or 7, wherein the quadrature amplitude demodulation step uses the uniform *m*-PAM symbol constellation for a quadrature axis and the non-uniform *m*-PAM symbol constellation for an in-phase axis.

10. The method according to one of claims 6 to 9, further comprising
combining bits of the encoded data from each axis of the quadrature amplitude modulation before application of the forward error correcting step.

11. Apparatus comprising:
a forward error correcting encoder for providing encoded data; and
a quadrature amplitude modulator for modulating the encoded data for transmission in accordance with a unified symbol constellation, wherein a uniform *m*-PAM symbol constellation is used for one axis of an *m²*-QAM modulation and a non-uniform *m*-PAM symbol constellation is used for the other axis of the *m²*-QAM modulation.

12. The apparatus of claim 11, further comprising
a partitioner for allocating bits of the encoded data to each axis of the quadrature amplitude modulation.

13. Apparatus comprising:
a quadrature amplitude demodulator for demodulating received data and for providing encoded data in accordance with a unified symbol constellation, wherein a uniform *m*-PAM symbol constellation is used for one axis of an *m²*-QAM modulation and a non-uniform *m*-PAM symbol constellation is used for the other axis of the *m²*-QAM modulation; and
a forward error correcting decoder for decoding the encoded data for providing error corrected data.

14. The apparatus of claim 13, further comprising
a combiner for combining bits of the encoded data from each axis of the quadrature amplitude modulation before application to the forward error correcting decoder

15. The apparatus of claim 11 or 13, working according to one of methods defined in claims 2, 3, 4, 7, 8 and 9.
